# EUROPEAN PATENT APPLICATION

(11) **EP 4 813 682 A1**
(43) Date of publication of application: **30.09.2026**
(21) Application number: 26157419.8
(22) Date of filing: 10.02.2026
(51) Int. Cl.: B60K 1/00, B60K 1/04, B60R 16/02, H02G 3/04, H02G 3/08

(54) **VEHICLE REAR PORTION STRUCTURE**

(30) Priority: 26.03.2025 JP 2025052165
(71) Applicant: Toyota Jidosha Kabushiki Kaisha, Toyota-shi, Aichi-ken 471-8571 (JP)
(72) Inventor: MARUHASHI, Motokuni, Toyota-shi, Aichi-ken, 471-8571 (JP); FUJIWARA, Nobuyoshi, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

A vehicle rear portion structure, including: a control device that is installed at a rear end portion side in a vehicle longitudinal direction and an upper side in a vehicle vertical direction of a battery case, and that controls operation of battery modules accommodated within the battery case; and a base that is provided at the rear end portion side in the vehicle longitudinal direction of the battery case, and at which routed members that are connected to the control device are configured to be routed, at least some of the routed members being routed along the vehicle vertical direction, and a routing block, which covers, from an outer side, the at least some of the routed members that are routed along the vehicle vertical direction, being formed at the base.

## Description

### BACKGROUND

### Technical Field

The present disclosure relates to a vehicle rear portion structure.

### Related Art

Japanese Patent Application Laid-Open (JP-A) No. 2022-49554 discloses a technique relating to a vehicle in which a battery pack is installed. In this related art, the battery pack is installed in the lower portion of the vehicle, and is electrically connected to an electrical unit installed at the vehicle front portion side. The electrical unit and the battery pack are connected via a wire harness. Electric power stored in the battery pack can be supplied to a motor, which drives the vehicle, via the wire harness and the electrical unit. Further, the outer side of the wire harness is covered by a harness cover that is formed by a metal plate member and is fixed to a floor panel.

By the way, it is preferable that the wire harness (hereinafter called "routed member") to be covered by a harness cover with respect to a collision of the vehicle. However, in the above-described related art, the harness cover is fixed to a floor panel, and therefore, a member for fixing the harness cover to the floor panel is separately required. Namely, it is desired to protect routed members efficiently within a limited space, from a collision of the vehicle.

### SUMMARY

The present disclosure provides a vehicle rear portion structure that can protect routed members efficiently within a limited space, from a collision of a vehicle.

A vehicle rear portion structure relating to a first aspect has: a control device that is installed at a rear end portion side in a vehicle longitudinal direction and an upper side in a vehicle vertical direction of a battery case, and that controls operation of battery modules accommodated within the battery case; and a base that is provided at the rear end portion side in the vehicle longitudinal direction of the battery case, and at which routed members that are connected to the control device are configured to be routed, and at least some of the routed members being routed along the vehicle vertical direction, and a routing block, which covers, from an outer side, the at least some of the routed members that are routed along the vehicle vertical direction, being formed at the base.

The vehicle rear portion structure relating to the first aspect has the control device and the base. The control device is installed at the rear end portion side in the vehicle longitudinal direction and at the upper side in the vehicle vertical direction of the battery case. Operation of the battery modules accommodated within the battery case is controlled by the control device. On the other hand, the base is provided at the rear end portion side in the vehicle longitudinal direction of the battery case, and routed members, which are connected to the control device, can be routed at the base. Further, the routing block is formed at the base. At the base, at least some of the routed members are routed along the vehicle vertical direction. The routed members that are routed along the vehicle vertical direction are covered from the outer side by the routing block.

In this way, in the present aspect, the routing block, at which the routed members are routed along the vehicle vertical direction and that covers the routed members from the outer side, is formed at the base. Due thereto, via the routing block, the routed members that are routed along the vehicle vertical direction can be protected from external forces that are applied in the vehicle longitudinal direction and the vehicle transverse direction to the routed members.

The routing block, which covers, from the outer side, the routed members that are routed along the vehicle vertical direction, is provided at the base at which the routed members are routed. Due thereto, there is no need to separately provide a protecting member for protecting the routed members that are routed along the vehicle vertical direction, and the routed members can be protected efficiently within a limited space.

In a vehicle rear portion structure relating to a second aspect, in the vehicle rear portion structure relating to the first aspect, the routing block is disposed at a vehicle rear side of a smoke exhausting valve that exhausts smoke generated within the battery case.

In the vehicle rear portion structure relating to the second aspect, the routing block is disposed at the vehicle rear side of the smoke exhausting valve that exhausts smoke that has been generated within the battery case. Due thereto, the smoke exhausting valve can be protected at the time of a rear collision of the vehicle.

In a vehicle rear portion structure relating to a third aspect, in the vehicle rear portion structure relating to the first aspect or the second aspect, the routing block stands erect from an upper surface of the base, and a cross-sectional shape of the routing block along a horizontal direction becomes larger on progression toward a vehicle lower side.

In the vehicle rear portion structure relating to the third aspect, the cross-sectional shape along the horizontal direction, of the routing block becomes larger on progression toward the vehicle lower side. Due thereto, the rigidity of the routing block becomes higher on progression toward the vehicle lower side. Accordingly, at the time of a rear collision of the vehicle, breakage due to a concentration of stress at the root portion of the routing block can be suppressed.

In a vehicle rear portion structure relating to a fourth aspect, in the vehicle rear portion structure relating to the second aspect, the routing block is shaped so as to be longer in a vehicle transverse direction than in the vehicle longitudinal direction as seen from above, and the routed members are spaced apart from each other in the vehicle transverse direction.

In the vehicle rear portion structure relating to the fourth aspect, the routing block is a shape that is flat in the vehicle transverse direction. Accordingly, the smoke exhausting valve can be protected by the routing block from external force at the vehicle rear side over a wide range in the vehicle transverse direction.

As described above, the vehicle rear portion structure relating to the present disclosure can protect routed members efficiently and within a limited space from a collision of the vehicle.

### BRIEF DESCRIPTION OF THE DRAWINGS

An exemplary embodiment of the present disclosure will be described in detail based on the following figures, wherein:
Fig. 1 is a schematic plan view illustrating a vehicle rear portion structure relating to a present embodiment;
Fig. 2 is a schematic perspective view illustrating a storage battery pack provided at the vehicle rear portion structure relating to the present embodiment;
Fig. 3 is a schematic sectional view in which the vehicle rear portion structure of Fig. 1 is cut along a vehicle longitudinal direction;
Fig. 4 is a schematic sectional view in which the vehicle rear portion structure of Fig. 1 is cut along a vehicle transverse direction;
Fig. 5 is a schematic sectional view in which the vehicle rear portion structure of Fig. 1 is cut along line A-A;
Fig. 6 is a partial, enlarged sectional view illustrating a portion of Fig. 4 in an enlarged manner;
Fig. 7 is an enlarged perspective view of main portions illustrating, in an enlarged manner, main portions of the vehicle rear portion structure relating to the present embodiment; and
Fig. 8 is an enlarged plan view of main portions illustrating, in an enlarged manner, main portions of the vehicle rear portion structure relating to the present embodiment.

### DETAILED DESCRIPTION

A vehicle rear portion structure relating to an embodiment of the present disclosure is described hereinafter by using the drawings. Note that members that are the same or correspond to one another in the drawings are denoted by the same or similar reference numerals, and redundant description is omitted. Further, in cases in which there is a plurality of the same or corresponding members in the drawings, reference numerals may be applied to only some thereof in order to make the drawings easier to understand. Moreover, arrow FR that is marked appropriately in the respective drawings indicates the front side in the vehicle longitudinal direction, and arrow UP indicates the upper side in the vehicle vertical direction. Arrow RH indicates the right side in the vehicle transverse direction, and indicates a vehicle transverse direction outer side in the present embodiment. Hereinafter, when description is given by using merely longitudinal, vertical and left-right directions, they refer to the longitudinal of the vehicle longitudinal direction, the vertical of the vehicle vertical direction, and the left and right of the vehicle left-right direction (vehicle transverse direction), unless otherwise indicated.

### Structure of Vehicle Rear Portion Structure

The structure of a vehicle rear portion structure relating to the present embodiment is described first.

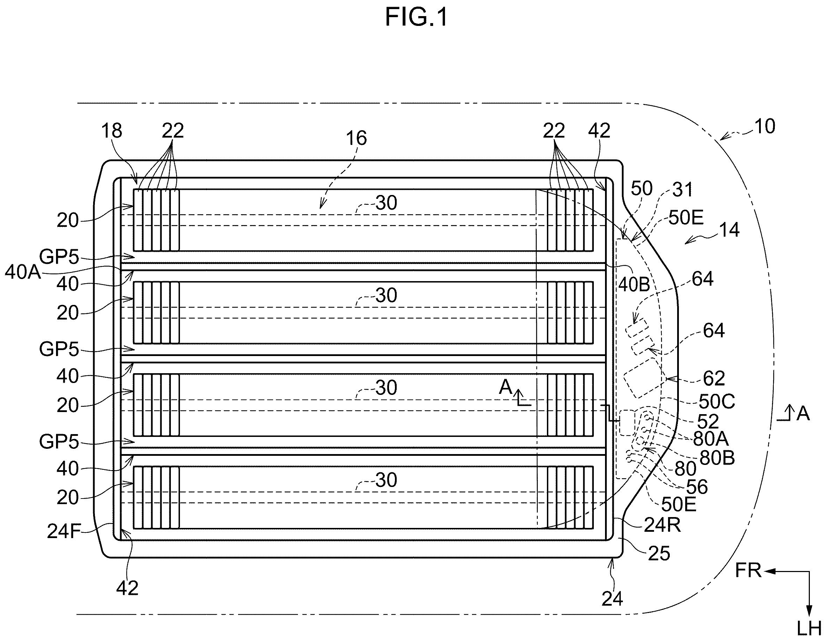

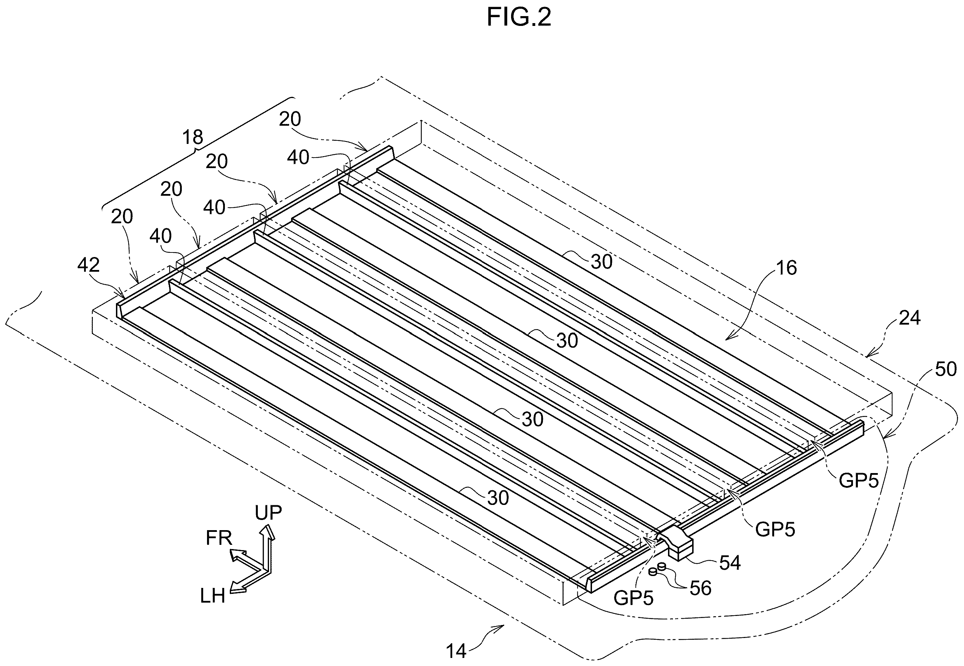

Fig. 1 is a schematic plan view illustrating a portion of a vehicle 10 that has a vehicle rear portion structure 14 of the present embodiment. Fig. 2 is a schematic perspective view illustrating a storage battery pack (battery case) 18 installed in the vehicle 10.

As illustrated in Fig. 1, the storage battery pack 18 installed in the vehicle 10 has plural (four in the present embodiment) storage battery modules (battery modules) 20 as illustrated in Fig. 2 as well, and these storage battery modules 20 are disposed so as to be lined-up in the vehicle transverse direction. Gaps GP5 are formed between the storage battery modules 20 that are adjacent to one another in the vehicle transverse direction. In the present embodiment, because there are four of the storage battery modules 20, there are three of the gaps GP5 that are formed between the storage battery modules 20.

As illustrated in Fig. 1, each of the storage battery modules 20 has plural storage battery cells 22, and the plural storage battery cells 22 are disposed so as to be lined-up in the vehicle longitudinal direction in the storage battery modules 20. Namely, the storage battery pack 18 is a structure in which the plural storage battery modules 20, which have the plural storage battery cells 22 that are disposed so as to be lined-up in the vehicle longitudinal direction, are disposed so as to be lined-up in the vehicle transverse direction.

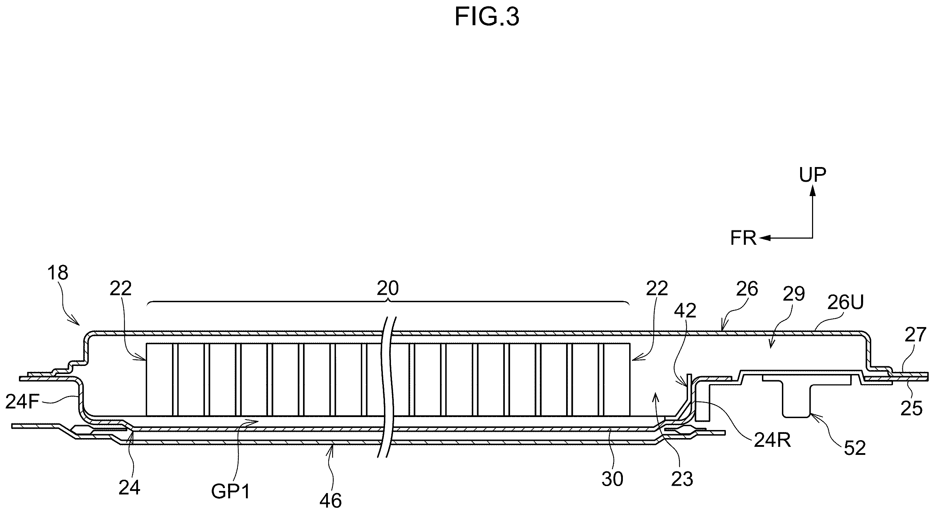

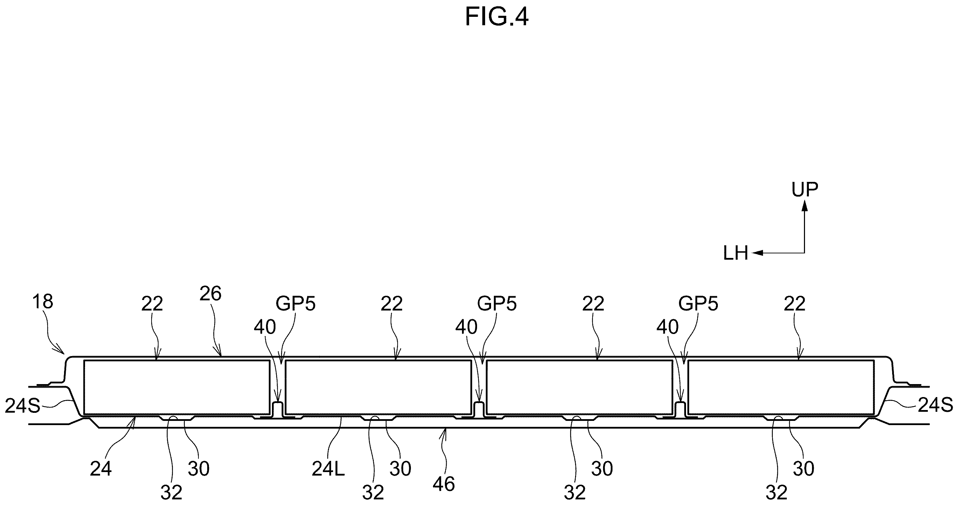

Fig. 3 is a cross-sectional view in which the vehicle rear portion structure 14 illustrated in Fig. 1 is cut along the vehicle longitudinal direction. Fig. 4 is a cross-sectional view in which the vehicle rear portion structure 14 illustrated in Fig. 1 is cut along the vehicle transverse direction. As illustrated in Fig. 3 and Fig. 4, the storage battery pack 18 has a lower case 24 and an upper cover 26, Note that illustration of the upper cover 26 is omitted in Fig. 1 and Fig. 2.

As illustrated in Fig. 3 and Fig. 4, the lower case 24 is a member at which is provided a box-shaped accommodating portion 23 that can accommodate the storage battery modules 20. The lower case 24 is structured to include a lower plate 24L, a front plate 24F, a rear plate 24R and a pair of left and right side plates 24S. The lower plate 24L is a plate-shaped region that supports the storage battery modules 20 from the lower side. The front plate 24F and the rear plate 24R are plate-shaped regions that stand erect from the front end portion and the rear end portion of the lower plate 24L, respectively. The side plates 24S are plate-shaped regions that stand erect from the vehicle transverse direction both sides of the lower plate 24L. The upper surface of the lower case 24 is open, and a flange portion 25 juts-out from the peripheral edge of the lower case 24 toward the outer side of the accommodating portion 23.

A shear panel 46 is provided at the lower side of the storage battery pack 18. The shear panel 46 covers the lower surface of the storage battery pack 18, and protects the storage battery modules 20 from foreign objects from the road and the like.

On the other hand, the upper cover 26 is a lid-shaped member that closes the upper surface of the lower case 24, and is formed to include the accommodating portion 23 that is structured by the upper cover 26 together with the lower case 24, and is structured similarly to the lower case 24. A flange portion 27 juts-out from the peripheral edge of the upper cover 26 toward the outer side of the accommodating portion 23. The flange portion 27 can be joined with the flange portion 25 formed at the lower case 24, in a state in which the flange portion 27 and the flange portion 25 are brought together.

As illustrated in Fig. 3, at the rear end portion of the lower case 24, the surface area of the flange portion 25 is greater than the surface area of the flange portion 27 of the upper cover 26. A space 29 that communicates with the accommodating portion 23 is provided between upper plate 26U of the upper cover 26 and the flange portion 25 of the lower case 24.

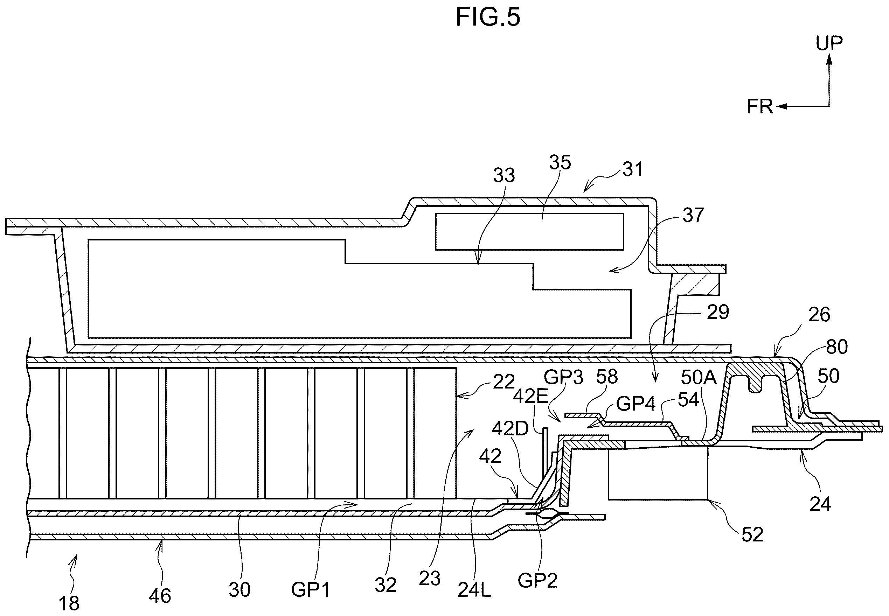

Fig. 5 is a schematic sectional view cut along line A-A of Fig. 1. Note that, although an equipment case 31 is illustrated by a virtual line in Fig. 1, the equipment case 31 is illustrated by a solid line in Fig. 5 in order to make the drawing easier to understand.

As illustrated in Fig. 5, the equipment case 31 is disposed above the rear end portion of the upper cover 26. A junction box 33 (control device) that houses a relay and auxiliary equipment, and an ECU (control device) 35, and the like are disposed within the equipment case 31. The relay and the auxiliary equipment are connected to the storage battery modules 20 by a wiring tube (routed member) 88 such as a wire harness that is described later, and are electrically connected to the storage battery modules 20.

An unillustrated opening portion is formed in the rear end portion of the upper cover 26. An interior space 37 of the equipment case 31 illustrated in Fig. 5, and the space 29 and the accommodating portion 23 of the storage battery pack 18, communicate through this opening portion.

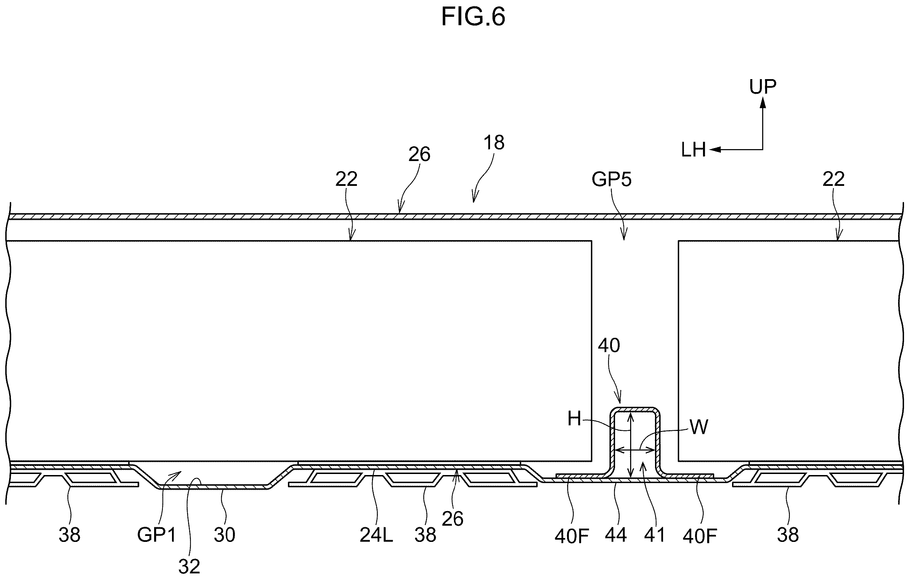

By the way, Fig. 6 is a partial, enlarged sectional view illustrating a portion of Fig. 4 in an enlarged manner. As illustrated in Fig. 4 and Fig. 6, plural (the same number as the number of the storage battery modules 20) downwardly convex portions 30 are formed at the lower plate 24L of the lower case 24. The downwardly convex portions 30 project out downwardly at the vehicle transverse direction central positions of the storage battery modules 20, respectively. Namely, at the downwardly convex portions 30, the lower case 24 is spaced apart from the lower surfaces of the storage battery cells 22, and gaps GP1 are formed.

The downwardly convex portions 30 are formed so as to extend in the vehicle longitudinal direction, i.e., the direction in which the storage battery cells 22 are lined-up, at the respective storage battery modules 20. The lengths in the vehicle longitudinal direction of the downwardly convex portions 30 are formed to be longer than the lengths in the vehicle longitudinal direction of the storage battery modules 20. The downwardly convex portions 30 extend in the vehicle longitudinal direction continuously from a vicinity of the front plate 24F illustrated in Fig. 3 to a vicinity of the rear plate 24R.

In this way, due to the gaps GP1 that are spaced apart from the lower surfaces of the storage battery cells 22 extending in the vehicle longitudinal direction due to the downwardly convex portions 30, the gaps GP1 structure portions of a smoke exhausting flow path 32. If, for some reason, gas that contains smoke (hereinafter this gas is simply called "smoke") is generated at the storage battery cell 22, the smoke is exhausted from the vehicle transverse direction central position of the lower surface of the storage battery cell 22. Accordingly, smoke generated at the storage battery cell 22 flows into the gap GP1 structured by the downwardly convex portion 30. As will be described later, the smoke exhausting flow path 32 is provided continuously from the gaps GP1 to GP4, and generated smoke is efficiently guided to a smoke exhausting valve 52.

On the other hand, coolers 38 are provided at the lower case 24 along the vehicle longitudinal direction. The coolers 38 are respectively provided at both vehicle transverse direction sides of the downwardly convex portions 30 at the lower surface of the lower case 24, and structure coolant flow paths that extend in the vehicle longitudinal direction. Due to heat of the coolers 38 being transferred to the coolant flowing through the coolant flow paths, the storage battery cells 22 are cooled, and overheating of the storage battery cells 22 can be suppressed.

As illustrated in Fig. 1, a reinforcing member 40 is disposed at each of the gaps GP5 that are between the storage battery modules 20. As illustrated in Fig. 6, the cross-sectional shape, which is cut along the vehicle transverse direction, of the reinforcing member 40 is a substantially hat-shaped cross-sectional shape whose lower side is open.

As illustrated in Fig. 1, the reinforcing members 40 have lengths such that they reach a vicinity of the front plate 24F of the lower case 24 and a vicinity of the rear plate 24R of the lower case 24. Front ends 40A and rear ends 40B of the reinforcing members 40 are joined to the front plate 24F and the rear plate 24R of the lower case 24 by joining members 42, respectively. The reinforcing members 40 thereby reinforce the storage battery pack 18.

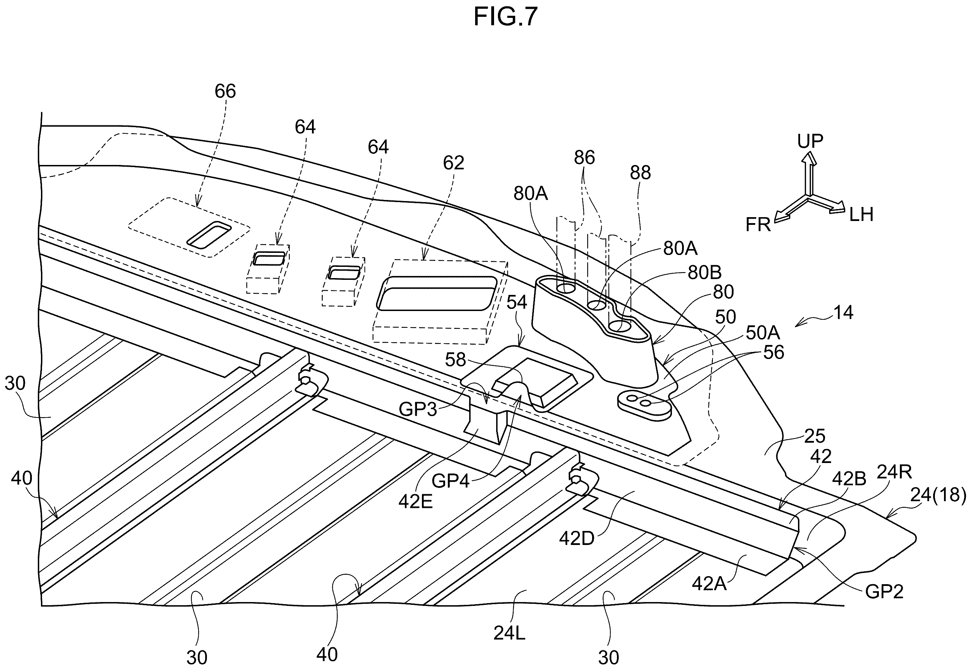

A perspective view of the rear plate 24R side of the lower case 24 is shown in Fig. 7. As illustrated in Fig. 7, the joining member 42 has a first separate portion 42D, which is spaced apart from the rear plate 24R of the lower case 24, between joined surface 42A that planarly contacts the lower plate 24L of the lower case 24 and joined surface 42B that planarly contacts the rear plate 24R of the lower case 24. The first separate portion 42D is formed at an incline as seen in a cross-section in the vehicle longitudinal direction, and a gap GP2 is formed between the first separate portion 42D and the rear plate 24R of the lower case 24. This gap GP2 is continuous in the vehicle transverse direction, and communicates with the gaps GP1 that are between the downwardly convex portions 30 and the lower surfaces of the storage battery cells 22. Namely, this gap GP2 structures a portion of the smoke exhausting flow path 32.

On the other hand, as illustrated in Fig. 6, cell seats 44 are formed at the lower plate 24L of the lower case 24 at the positions where the reinforcing members 40 are provided. The cell seats 44 are formed such that the lower plate 24L of the lower case 24 is convex downwardly at positions corresponding to the reinforcing members 40. Further, flange plates 40F of the reinforcing members 40 are joined to the cell seats 44, and the open portions at the lower sides of the reinforcing members 40 are closed-off such that closed cross-sectional portions 41 are formed.

Further, the front ends 40A and the rear ends 40B of the reinforcing members 40 illustrated in Fig. 1 are open, and communicate with the gaps GP2 illustrated in Fig. 7. Namely, the closed cross-sectional portions 41 structured by the reinforcing members 40 and the cell seats 44 communicate with the gaps GP2 illustrated in Fig. 7, and structure portions of the smoke exhausting flow path 32.

As illustrated in Fig. 6, height H of the reinforcing member 40 is larger than width W thereof. The width W is set in advance because the reinforcing member 40 is formed within the gap GP5 that is provided between the storage battery modules 20 that are adjacent to one another in the vehicle transverse direction. By setting the heights H of the reinforcing members 40 to be larger than the widths W thereof, as compared with a case in which the heights H are set to be the same sizes as the widths W, the second moment of area is improved and deformation can be suppressed at the reinforcing members 40.

Here, as illustrated in Fig. 7, a connector block (base) 50 is provided at the flange portion 25 that is provided at the rear end portion of the lower case 24. As illustrated in Fig. 1, the front side of the connector block 50 (the side at the vehicle front side) is rectilinear along the vehicle transverse direction. In contrast, the rear side of the connector block 50 (the side at the vehicle rear side) is curved such that the vehicle transverse direction center thereof is convex toward the vehicle rear side. Namely, central portion 50C in the vehicle transverse direction of the connector block 50 is formed to be longer in the vehicle longitudinal direction than both vehicle transverse direction end portions 50E.

Further, as illustrated in Fig. 5 and Fig. 7, the smoke exhausting valve 52 is provided at the vehicle transverse direction outer side at the connector block 50. A cover plate 54, which structures a portion of the smoke exhausting flow path 32 between the cover plate 54 and the connector block 50, is mounted to the connector block 50 from the storage battery pack 18 to the smoke exhausting valve 52.

An upwardly convex portion 58 is formed at the cover plate 54. At the side thereof that is at the vehicle front side, the upwardly convex portion 58 is shaped such that the vehicle transverse direction central portion thereof is curved convexly upward. Due to the upwardly convex portion 58 being formed, the gap GP4 is structured between the cover plate 54 and the connector block 50. Smoke can move in the vehicle longitudinal direction through this gap GP4, and the gap GP4 structures a portion of the smoke exhausting flow path 32.

Further, a second separate portion 42E is provided at the joining member 42 that is joined to the rear plate 24R of the lower case 24. The second separate portion 42E is formed at a position corresponding to the upwardly convex portion 58 in the vehicle transverse direction. The second separate portion 42E is spaced apart from the rear plate 24R of the lower case 24, and is continuous with the first separate portion 42D. Gap GP3 is structured between the second separate portion 42E and the rear plate 24R of the lower case 24.

Accordingly, the smoke exhausting flow path 32 within the storage battery pack 18 is formed so as to be continuous from the gaps GP1 between the lower surfaces of the storage battery cells 22 and the downwardly convex portions 30, through the gap GP2 between the second separate portion 42E and the rear plate 24R of the lower case 24, and through the gap GP3 between the second separate portion 42E and the rear plate 24R of the lower case 24, and through the gap GP4 between the cover plate 54 and the lower case 24, all the way to the smoke exhausting valve 52.

The smoke exhausting valve 52 is configured to open when the internal pressure of the smoke exhausting flow path 32 becomes higher than the air pressure at the exterior of the smoke exhausting flow path 32 by a predetermined value or more. Namely, when smoke flows into the smoke exhausting flow path 32 and the internal pressure increases by a predetermined value or more, the smoke exhausting valve 52 opens, and gas within the smoke exhausting flow path 32 is exhausted to the exterior.

Moreover, breathable membranes 56 are mounted to the connector block 50. Gasses pass through the breathable membranes 56, but the passage of liquid (including vapor) is impeded. Gore-Tex^{™} for example is used as the material thereof. Further, the breathable membranes 56 are formed such that, even if gas passes therethrough, due to the breathable membranes 56 applying resistance to the movement of the gas, the gas does not move all at once in a short period of time. In the present embodiment, the breathable membranes 56 are provided at a position that is further toward the vehicle transverse direction outer side than the smoke exhausting valve 52.

On the other hand, as illustrated in Fig. 7, for example, a first connector 62 made of resin, second connectors 64 made of resin and a third connector 66 made of metal are disposed at the lower surface side of the connector block 50, including a region at the vehicle transverse direction central side. Note that, although not illustrated, wires are connected to these connectors respectively. Further, among these connectors, the first connector 62 is disposed at the smoke exhausting valve 52 side, and the second connectors 64 and the third connector 66 are disposed at the side of the first connector 62 that is opposite the side at which the smoke exhausting valve 52 is located.

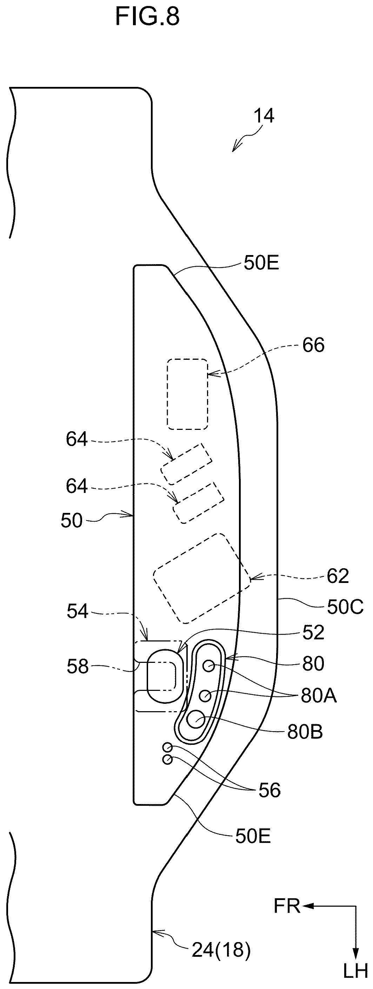

Here, in the present embodiment, as illustrated in Fig. 7 and Fig. 8, the smoke exhausting valve 52 and the breathable membranes 56 are provided at the connector block 50 at a vehicle transverse direction outer side, and a routing block 80 is formed at the connector block 50 at further toward the vehicle rear side than the smoke exhausting valve 52 and the breathable membranes 56. This routing block 80 stands erect from upper surface 50A of the connector block 50, and is shaped as a tube that is flat in the vehicle longitudinal direction.

Specifically, as seen from the vehicle upper side, the routing block 80 is shaped so as be longer in the vehicle transverse direction than in the vehicle longitudinal direction, and is provided at the outer edge side of the connector block 50. Further, as seen from the vehicle outer side, the routing block is formed in a substantially truncated cone shape, and the cross-sectional shape thereof that is cut along the horizontal direction becomes larger on progression toward the vehicle lower side.

First insert-through holes 80A and a second insert-through hole 80B that are circular and pass through the connector block 50 in the vertical direction are formed at the inner side of the routing block 80. In the present embodiment, there are two of the first insert-through holes 80A, and there is the one second insert-through hole 80B, and it has a larger diameter than the first insert-through holes 80A. The second insert-through hole 80B is provided further toward the vehicle transverse direction outer side than the first insert-through holes 80A. The two first insert-through holes 80A are spaced apart in the vehicle transverse direction, and further, the second insert-through hole 80B as well is spaced apart from the first insert-through holes 80A in the vehicle transverse direction.

For example, circulating pipes (routed members) 86, which circulate cooling water to onboard devices of the vehicle, are inserted through the first insert-through holes 80A. The wiring tube (routed member) 88, in which are accommodated plural wires that transmit electrical signals to onboard devices, is inserted through the second insert-through hole 80B. The circulating pipes 86 and the wiring tube 88 are examples of routed members that are routed in the vehicle. Namely, in the present embodiment, there is a structure in which the plural routed members that are space apart from one another in the vehicle transverse direction are inserted through the routing block 80 along the vertical direction.

### Operation and Effects of Vehicle Rear Portion Structure

Operation and effects of the vehicle rear portion structure relating to the present embodiment are described next.

In the vehicle 10 to which is applied the vehicle rear portion structure 14 of the present embodiment that is illustrated in Fig. 1, the storage battery modules 20 are structured by the plural storage battery cells 22. The storage battery cells 22 are disposed so as to be lined-up in the vehicle longitudinal direction at the storage battery modules 20, and further, the storage battery modules 20 are disposed so as to be lined-up in the vehicle transverse direction. Due thereto, the plural storage battery cells 22 can be arranged efficiently in the vehicle longitudinal direction and the vehicle transverse direction. In particular, because the direction in which the storage battery cells 22 are arrayed at the storage battery modules 20 is the vehicle longitudinal direction, the number of storage battery cells 22 per one row can be made to be larger as compared with a structure in which the storage battery cells 22 are arrayed in the vehicle transverse direction.

In a usual state, smoke is not generated at the storage battery cells 22 illustrated in Fig. 5. However, if, due to some circumstance, smoke is generated, the smoke is exhausted from the vehicle transverse direction central position of the lower surface of the storage battery cell 22. This smoke flows-out into the gap GP1 provided between the downwardly convex portion 30 of the lower case 24 of the storage battery pack 18 and the lower surface of the storage battery cell 22. Further, this smoke passes through the gap GP2 and the gap GP3 that are respectively provided at the rear plate 24R side of the lower case 24, and through the gap GP4 provided between the cover plate 54 and the connector block 50 that are respectively provided at the rear end portion of the lower case 24, and flows all the way to the smoke exhausting valve 52. The gaps GP1 through the gap GP4 respectively structure portions of the smoke exhausting flow path 32. When the pressure at the interior of the smoke exhausting flow path 32 becomes higher than pressure at the exterior, the smoke is exhausted from the smoke exhausting valve 52.

Further, in the present embodiment, the breathable membranes 56 are provided. The breathable membranes 56 permit movement of gasses with respect to the smoke exhausting flow path 32, and impede movement of liquids. For example, in a case in which the vehicle 10 moves to a place with a different external air pressure (e.g., a place at a high altitude), the pressure difference between the internal pressure of the smoke exhausting flow path 32 and the external air pressure becomes larger. In this case, the pressure difference can be mitigated due to air passing through the breathable membranes 56.

Here, in the present embodiment, as illustrated in Fig. 7 and Fig. 8, the routing block 80 stands erect at the connector block 50. The first insert-through holes 80A and the second insert-through hole 80B that pass-through in the vertical direction are formed in the routing block 80. The circulating pipes 86 and the wiring tube 88, which are respectively connected to auxiliary equipment within the equipment case 31 provided at the upper side of the rear end portion of the storage battery pack 18 illustrated in Fig. 1 and Fig. 5, are routed within the first insert-through holes 80A and the second insert-through hole 80B along the vertical direction.

Namely, in the present embodiment, as illustrated in Fig. 7, the circulating pipes 86 and the wiring tube 88 are routed along the vertical direction, and the circulating pipes 86 and the wiring tube 88 are covered from the outer side by the routing block 80. Accordingly, in the present embodiment, the circulating pipes 86 and the wiring tube 88 can be protected, via the routing block 80, from external forces that are applied in the vehicle longitudinal direction and the vehicle transverse direction.

In this way, in the present embodiment, the routing block 80, which covers from the outer side the circulating pipes 86 and the wiring tube 88 that are routed in the vertical direction, is provided at the connector block 50 in which the first connector 62, the second connectors 64, the third connector 66 and the like are routed. Due thereto, there is no need to separately provide a protecting member for protecting the circulating pipes 86 and the wiring tube 88. Accordingly, in the present embodiment, routed members can be protected efficiently within a limited space from a collision of the vehicle 10.

Further, due to the circulating pipes 86 being protected via the routing block 80 in this way, leaking of the liquid that flows through the circulating pipes 86 can be suppressed. Note that, in the present embodiment, the liquid that flows through the circulating pipes 86 is coolant that is circulated to onboard devices. Therefore, in the present embodiment, due to the circulation of the coolant being ensured, it can be made such that operation of onboard devices is not affected.

Moreover, as illustrated in Fig. 7 and Fig. 8, in the present embodiment, the routing block 80 is disposed further toward the vehicle rear side than the smoke exhausting valve 52. Accordingly, even if external force is applied from the vehicle rear side, that external force being applied directly to the smoke exhausting valve 52 is suppressed. Therefore, in the present embodiment, the smoke exhausting valve 52 can be protected at the time of a rear collision of the vehicle 10.

Still further, in the present embodiment, the circulating pipes 86 and the wiring tube 88 are spaced apart from each other in the transverse direction, and the routing block 80 is formed in a shape that is flat in the vehicle transverse direction, i.e., a shape that is longer in the vehicle transverse direction than in the vehicle longitudinal direction as seen from above. Accordingly, the smoke exhausting valve 52 can be protected by the routing block 80 from external force at the vehicle rear side over a wide range in the vehicle transverse direction.

Further, the routing block 80 stands erect from the upper surface 50A of the connector block 50, and the cross-sectional shape thereof along the horizontal direction becomes larger on progression toward the vehicle lower side. Therefore, the rigidity of the routing block 80 becomes higher on progression toward the vehicle lower side. Due thereto, at the time of a rear collision of the vehicle 10, breakage due to concentration of stress at the root portion of the routing block 80 can be suppressed.

Although an embodiment of the present disclosure has been described above, the present disclosure is not limited to this embodiment. The embodiment and various modified examples may be used by being combined appropriately, and the present disclosure can, of course, be implemented in various forms within a scope that does not depart from the gist thereof.

## Claims

1. A vehicle rear portion structure (14), comprising:
a control device (33,35) that is installed at a rear end portion side in a vehicle longitudinal direction and an upper side in a vehicle vertical direction of a battery case (18), and that controls operation of battery modules (20) accommodated within the battery case (18); and
a base (50) that is provided at the rear end portion side in the vehicle longitudinal direction of the battery case (18), and at which routed members (86,88) that are connected to the control device (33,35) are configured to be routed, at least some of the routed members (86,88) being routed along the vehicle vertical direction, and a routing block (80), which covers, from an outer side, the at least some of the routed members (86,88) that are routed along the vehicle vertical direction, being formed at the base (50).

2. The vehicle rear portion structure of claim 1, wherein the routing block (80) is disposed at a vehicle rear side of a smoke exhausting valve (52) that exhausts smoke generated within the battery case.

3. The vehicle rear portion structure of claim 1 or claim 2, wherein the routing block (80) stands erect from an upper surface of the base (50), and a cross-sectional shape of the routing block (80) along a horizontal direction becomes larger on progression toward a vehicle lower side.

4. The vehicle rear portion structure of claim 2, wherein:
the routing block (80) is shaped so as to be longer in a vehicle transverse direction than in the vehicle longitudinal direction as seen from above, and
the routed members (86,88) are spaced apart from each other in the vehicle transverse direction.
